# EUROPEAN PATENT SPECIFICATION

(11) **EP 2 416 921 B1**
(45) Date of publication and mention of the grant of the patent: **17.12.2014**
(21) Application number: 10726634.8
(22) Date of filing: 07.04.2010
(51) Int. Cl.: B23K 26/06, B23K 26/20, B23K 26/14, B23K 26/30, B23K 26/00

(54) **LASER PROCESSING APPARATUS WITH MIRROR HAVING DIFFERENT CONCAVE PROFILES**
LASERBEARBEITUNGSVORRICHTUNG MIT EINEM VERSCHIEDENE KONKAVE PROFILE AUFWEISENDEN SPIEGEL
APPAREIL DE TRAITEMENT AU LASER COMPRENANT UN MIROIR PRÉSENTANT DIFFÉRENTS PROFILS CONCAVES

(30) Priority: 08.04.2009 PL 38774309
(43) Date of publication of application: 15.02.2012
(73) Proprietor: Politechnika Swietokrzyska, 25-314 Kielce (PL)
(72) Inventor: BOLANOWSKI, Kazimierz, PL-25-637 Kielce (PL); DEPCZYNSKI, Wojciech, PL-38-200 Jaslo (PL); GRYSA, Krzysztof, PL-26-008 G rno (PL)
(74) Representative: Garstka, Antoni Czeslaw
(86) International application number: PCT/PL2010/000025
(87) International publication number: WO 2010/117286

(56) References cited:
- CN-A- 1 521 906
- US-A- 4 288 678
- US-A- 5 824 023
- US-A1- 2005 205 803
- US-B1- 6 392 978

## Description

The present invention relates to a laser processing apparatus equipped with a mirror intended to increase the effective use of a laser beam, on which the preamble of claim 1 is based. More specifically, the invention relates to the effective use of laser energy for heating and cutting various materials, preferably metals.

The applications of laser in engineering and manufacture involve considerable scattering of electromagnetic radiation, which leads to a decrease in the real powder of a laser beam and, accordingly, a decrease in the efficiency and capacity of the laser-workpiece system. It is estimated that the proportion of laser energy scattered is significant. For some materials, it may reach 95%. A well-known method used to prevent radiation scattering involves applying antireflexive layers to the surface of the workpiece to be processed. Such layers are capable of absorbing scattered energy, which results in an improvement in the laser effectiveness. This method, however, can create problems, as the layers may interact chemically or physically with the workpiece material, which is an undesirable phenomenon. The most effective are metal-oxide layers, some of which may absorb up to 90 % of laser energy.

The methods described in US Patent Applications Nos. 4288678A, according to the preamble of claim 1, and 4665298A imply that the effectiveness of laser processing can be enhanced by using a spherical mirror. A similar technique was described in Polish Patent Application No 306289. These inventions relate to apparatuses including a mirror whose surface is in the shape of a section of a sphere. Such a mirror directs the radiation beam reflected by the surface of a workpiece back to a primary focus point causing an increase in the material temperature. US Patent Application No 4665298A describes a mirror with a profile in the shape similar to that of an ellipsoid. The profile is generated by joining several flat mirrors together. In that invention, two focus points are generated on the workpiece surface. The radiation that is not absorbed by the workpiece travels to the ellipsoidal mirror_where it is reflected back to the primary focus point or redirected to a secondary focus point. The radiation reflected back to the primary focus point enhances the effectiveness of the laser beam.

According to the present invention, the laser processing apparatus is defined in claim 1.

The shape of the mirror surface contributes to an increase in the capacity of the laser-workpiece system. The shape of the mirror is responsible for the generation of a secondary beam, which allows the formation of an absorptive layer. The secondary beam forms as a result of reflection of the radiation beam reflected by the ellipsoidal surface of the mirror. The radiation is directed to a focus point preceding the primary focus point formed by the laser beam. The spherical part of the mirror reflects the radiation back to the primary focus point, which increases the effectiveness of the laser beam.

An alternative solution is that the concave surface of the mirror consists in having the shape formed by the combined intersecting profiles of the surfaces of a sphere and a paraboloid. In such a case, the radiation reaching the spherical part of the mirror is reflected back to the primary focus point, which enhances the effectiveness of the laser beam, while the radiation reaching the parabolic surface is reflected back to the workpiece surface causing an increase in the material temperature.

Another solution is that the concave surface of the mirror consists in having the shape formed by the combined intersecting profiles of the surfaces of a paraboloid and an ellipsoid. The radiation beam reflected back by the parabolic part of the mirror heats the surface of the workpiece, while the radiation beam reflected by the ellipsoidal part constitutes a secondary beam. The secondary beam generates a secondary focus point, which causes an increase in the temperature of the workpiece surface. Depending on the laser processing direction, the secondary beam is responsible for the formation of an absorptive layer or for surface heating at the secondary focus point, with the latter preventing too rapid a decrease in the workpiece temperature.

In the next solution, the concave surface of the mirror consists in having the shape formed by the combined intersecting profiles of the surfaces of a sphere, a paraboloid and an ellipsoid, with the ellipsoidal surface being located within the spherical part of the mirror. Part of the reflected radiation reaching the ellipsoidal surface located within the spherical surface is redirected to the secondary focus point, which causes a decrease in the power of the laser beam reflected back to the primary focus point by the spherical surface of the mirror.

Still another solution is to employ a mirror whose concave surface consists in having the shape formed by the combined intersecting profiles of the surfaces of a sphere, an ellipsoid and a paraboloid, with the ellipsoidal surface being located within the parabolic surface. The shape of the mirror is intended to help increase the efficiency of the laser-workpiece system and generate a secondary beam. The amount of the secondary radiation beam can be regulated depending on the type of material to be processed.

The secondary beam generated as a result of the reflection of scattered radiation is responsible for the formation of an absorptive oxide layer that is capable of absorbing up to 95% of the energy of the laser beam. This eliminates the necessity of depositing an antireflexive layer. By increasing the efficiency of the laser-workpiece system, it is possible to process workpieces with larger cross-sections, or to reduce the power of lasers or to increase their capacity. This also allows effective alloying, metal remelting and more efficient heat treatment of metal and alloy surfaces.

The formation of a secondary beam may have a positive effect on the welding process. Many types of materials need to be preheated to a relatively high temperature before they are welded. A secondary beam makes it possible to obtain an appropriate temperature of the material to be processed without the need to apply other pre-heating methods, e.g. preheating in a furnace, preheating with a burner, etc. Applying a secondary radiation beam is a simple and cheap method for the preparation of material to be welded, e.g. structures with large dimensions such as sheet pile walls in boilers.

Hereinafter, the embodiments of the present invention will be described in detail with reference to the accompanying drawings; FIG. 1 shows schematically a laser radiation generator including a concave mirror, which consists in having the shape formed by the combined intersecting profiles of the surfaces of a sphere and an ellipsoid; FIG. 2 shows schematically a laser radiation generator including a concave mirror which consists in having the shape formed by the combined intersecting profiles of the surfaces of a sphere and paraboloid; FIG. 3 shows schematically a laser radiation generator including a concave mirror which consists in having the shape formed by the combined intersecting profiles of the surfaces of a paraboloid and an ellipsoid; FIG 4 shows schematically a laser radiation generator including a concave mirror which consists in having the shape formed by the combined intersecting profiles of the surfaces of a sphere, a paraboloid and an ellipsoid; FIG. 5 shows schematically a laser radiation generator including a concave mirror which consists in having the shape formed by the combined intersecting profiles of the surfaces of a sphere, an ellipsoid and a paraboloid.

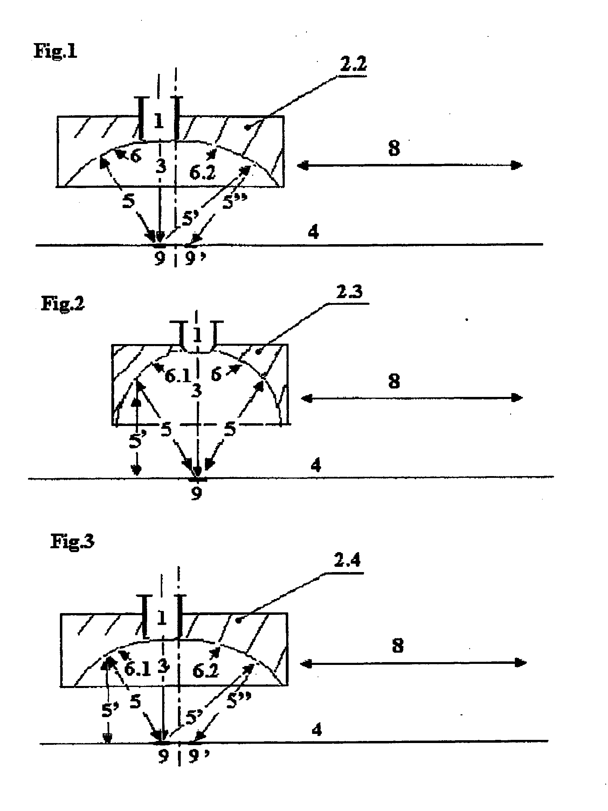

In the embodiment shown in FIG. 1, the concave mirror **2.2** mounted on the laser radiation generator **1** consists in having the shape formed by the combined intersecting profiles of the surfaces of a sphere **6** and an ellipsoid **6.2.** The laser generator **1** emits a radiation beam **3** that is focused onto a workpiece **4.** Part of the radiation **3** that is not absorbed by the said workpiece **4** travels to the mirror **2.2.** as beam **5.** After reaching the spherical surface **6** beam **5** is reflected back to the primary focus point **9** on the workpiece **4** causing an increase in the material temperature. Part of beam 5 reaching the ellipsoidal surface **6.2** of the mirror **2.2** is, depending on the angle of incidence, reflected back to the primary focus point **9** or redirected as beam **5'** to the primary focus point **9** or as beam 5" to the secondary focus point **9'.** The arrow 8 designates the direction of the laser beam relative to the workpiece **4.**

Figure **2** illustrates an embodiment where the laser radiation generator 1 includes **a** mirror **2.3** consisting in a concave surface the shape of which is formed by the combined intersecting profiles of the surfaces of a paraboloid **6.1** and a sphere **6.** The laser generator **1** emits a radiation beam **3** that is focused onto a workpiece **4.** Part of the radiation **3** that is not absorbed by the said workpiece **4** travels to the mirror **2.3** as beam **5.** Part of beam 5 reaching the parabolic surface **6.1** of the mirror **2.3** is, depending on the angle of incidence, reflected back to the primary focus point **9** or redirected as beam **5'** perpendicular to the workpiece **4,** causing an increase in the workpiece temperature. Part of beam **5** that reaches the spherical surface **6** of the mirror **2.3** is reflected back to the primary focus point **9.**

As illustrated in FIG. 3, the laser radiation generator **1** includes a mirror **2.4** consisting in a concave surface the shape of which is formed by the combined intersecting profiles of the surfaces of a paraboloid **6.1** and an ellipsoid **6.2.** The laser generator **1** emits a radiation beam **3** that is focused onto a workpiece **4.** Part of the radiation **3** that is not absorbed by the said workpiece **4** travels to the mirror **2.4** as beams designated as **5** and **5'.** Part of beam **5** reaching the parabolic surface is, depending on the angle of incidence, reflected back to the focus point **9** or redirected as laser beam **5'** perpendicular to the workpiece **4,** which causes an increase in the workpiece temperature. Part of beam **5** that reaches the ellipsoidal surface **6.2** of the mirror **2.4** is reflected as beam **5"** to the secondary focus point **9'.**

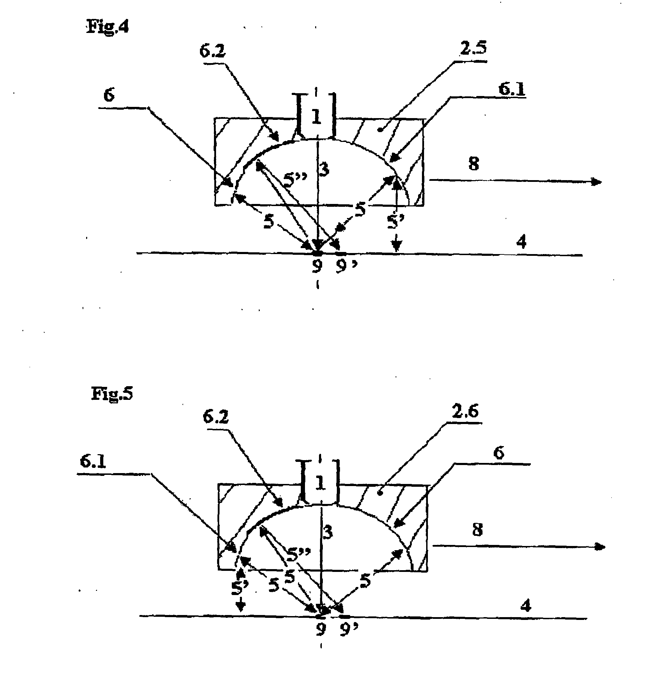

In the embodiment presented in FIG. 4, the concave surface of the mirror **2.5** consists in having the shape formed by the combined intersecting profiles of the surfaces of a sphere **6,** a paraboloid **6.1** and an ellipsoid **6.2,** with the ellipsoidal surface **6.2** being located within the spherical surface **6.** The laser generator 1 emits a radiation beam **3** that is focused onto a workpiece **4.** Part of the radiation **3** that is not absorbed by the said workpiece **4** travels to the mirror **2.5** as beam **5,** and depending on the angle of incidence, it is then reflected by the spherical surface **6** and the ellipsoidal surface **6.2** of the mirror **2.5** back to the primary focus point **9** or redirected by the ellipsoidal surface as the secondary radiation beam **5"** to the secondary focus point **9',** causing an initial increase in the workpiece temperature, which leads to the surface oxidation. Part of beam **5** that reaches the parabolic surface **6.1** of the mirror **2.5** is, depending on the angle of incidence, reflected back to the primary focus point **9** or redirected as beam **5'** perpendicular to the workpiece **4,** causing an increase in the workpiece temperature.

In the solution shown in FIG. 5, the concave surface of the mirror **2.6** consists in having the shape formed by the combined intersecting profiles of the surfaces of a sphere **6,** an ellipsoid **6.2** and a paraboloid **6.1,** with the ellipsoidal surface **6.2** being located within the parabolic surface 6.1. The laser generator **1** emits a radiation beam **3** that is focused onto a workpiece **4.** Part of the radiation **3** that is not absorbed by the said workpiece **4** travels to the mirror **2.6** as beam **5.** Part of beam 5 that reaches the parabolic surface **6.1** of the mirror **2.6** is, depending on the angle of incidence, reflected back to the primary focus point **9** or redirected as beam **5'** perpendicular to the workpiece **4,** which causes an increase in the material temperature. Part of beam **5** that reaches the ellipsoidal surface **6.2** of the mirror **2.6** is, depending on the angle of incidence, reflected back to the primary focus point 9 or redirected as beam **5"** to the secondary focus point **9',** which causes an initial increase in the temperature of the workpiece leading to the surface oxidation, Part of beam **5** that reaches the spherical surface **6** of the mirror **2.6** is reflected back to the focus point **9,** causing an increase in the workpiece temperature.

In each of the embodiments of the present invention, the laser generator moves in the direction designated as **8.** For the solutions shown in FIGS. 1-3, the direction of the motion of the laser generator has no effect on the operation of the apparatus.

## Claims

1. The laser processing apparatus including a concave mirror fixed to the laser radiation generator intended to direct a radiation beam reflected by the surface of a workpiece back onto the said workpiece is **characterised in that** the continuous concave surface of the mirror consists in having the shape formed by the combined intersecting profiles of two or three concave surfaces.

2. The apparatus, according to Claim 1, is **characterised in that** the concave surface of the mirror **(2.2)** consists in having the shape formed by the combined intersecting profiles of the surfaces of a sphere **(6)** and an ellipsoid **(6.2).**

3. The apparatus, according to Claim 1, is **characterised in that** the concave surface of the mirror (2.3) consists in having the shape formed by the combined intersecting profiles of the surfaces of a sphere **(6)** and a paraboloid **(6.1).**

4. The apparatus, according to Claim 1, is **characterised in that** the concave surface of the mirror **(2.4)** consists in having the shape formed by the combined intersecting profiles of the surfaces of a paraboloid **(6.1)** and an ellipsoid **(6.2).**

5. The apparatus, according to Claim 1, is **characterised in that** the concave surface of the mirror **(2.5)** consists in having the shape formed by the combined intersecting profiles of the surfaces of a sphere **(6),** a paraboloid **(6.1)** and an ellipsoid **(6.2),** with the ellipsoidal surface **(6.2)** being located within the spherical surface **(6).**

6. The apparatus, according to Claim 1, is **characterised in that** the concave surface of the mirror **(2.6)** consists in having the shape formed by the combined intersecting profiles of the surfaces of a sphere **(6)** an ellipsoid **(6.2)** and a paraboloid **(6.1),** with the ellipsoidal surface **(6.2)** being Jocated within the parabolic surface **(6.1).**

## Patentansprüche

1. Die Laserbearbeitungsvorrichtung, die einen konkaven Spiegel enthält, gefestigt am Laserradiationsgenerator, bestimmt zur Lenkung vom Strahlungsbündel, der von der Oberfläche des bearbeiteten Gegenstandes zurück auf diesen Gegenstand reflektiert wird, ist **dadurch gekennzeichnet, dass** die kontinuierliche konkave Spiegeloberfläche darin besteht, dass sie eine Gestalt aufweist, gebildet durch die sich überschneidenden verbundenen Profile von zwei oder drei konkaven Oberflächen.

2. Diese Vorrichtung, gemäß Anspruch 1, ist **dadurch gekennzeichnet, dass** die konkave Spiegeloberfläche **(2.2)** darin besteht, dass sie eine Gestalt aufweist, gebildet durch die verbundenen sich überschneidenden Profile der Kugel- **(6)** und Ellipsoidoberflächen **(6.2).**

3. Diese Vorrichtung, gemäß Anspruch 1, ist **dadurch gekennzeichnet, dass** die konkave Spiegeloberfläche (2.3) darin besteht, dass sie eine Gestalt aufweist, gebildet durch die verbundenen sich überschneidenden Profile der Kugel- **(6)** und Paraboloidoberflächen **(6.1).**

4. Diese Vorrichtung, gemäß Anspruch 1, ist **dadurch gekennzeichnet, dass** die konkave Spiegeloberfläche **(2.4)** darin besteht, dass sie eine Gestalt aufweist, gebildet durch die verbundenen sich überschneidenden Profile der Paraboloid- (**6.1**) und Ellipsoidoberflächen **(6.2).**

5. Diese Vorrichtung, gemäß Anspruch 1, ist **dadurch gekennzeichnet, dass** die konkave Spiegeloberfläche **(2.5)** darin besteht, dass sie eine Gestalt aufweist, gebildet durch die verbundenen sich überschneidenden Profile der Kugel- **(6),** Paraboilod- **(6.1)** und Ellipsoidoberflächen **(6.2),** wobei die Ellipsoidoberfläche **(6.2)** sich im Berech der Kugeloberfläche **(6)** befindet.

6. Diese Vorrichtung, gemäß Anspruch 1, ist **dadurch gekennzeichnet, dass** die konkave Spiegeloberfläche **(2.6)** darin besteht, dass sie eine Gestalt aufweist, gebildet durch die verbundenen sich überschneidenden Profile der Kugel- **(6),** Ellipsoid- (**6.2**) und Paraboloidoberflächen **(6.1),** wobei die Ellipsoidoberfläche **(6.2)** sich im Berech der Paraboloidoberfläche **(6.1)** befindet.

## Revendications

1. L'appareil de traitement au laser comprenant un miroir concave fixé au générateur de radiation de laser destiné à diriger le faisceau de rayonnement reflété de la surface de l'objet traité de nouveau sur cet objet, **caractérisé par le fait que** la surface continue concave du miroir consiste à avoir une forme créée par une combinaison des profils superposants de deux ou trois surfaces concaves.

2. L'appareil selon la revendication 1, **caractérisé par le fait que** la surface concave du miroir **(2.2)** consiste à avoir une forme créée par une combinaison des profils superposants des surfaces de la sphère**(6)** et de l'ellipsoïde **(6.2).**

3. L'appareil selon la revendication 1, **caractérisé par le fait que** la surface concave du miroir **(2.3)** consiste à avoir une forme créée par une combinaison des profils superposants des surfaces de la sphere **(6)et** du paraboloïde (**6.1**).

4. L'appareil selon la revendication 1, **caractérisé par le fait que** la surface concave du miroir **(2.4)** consiste à avoir une forme créée par une combinaison des profils superposants des surfaces du paraboloïde (**6.1**) et de l'ellipsoïde **(6.2).**

5. L'appareil selon la revendication 1, **caractérisé par le fait que** la surface concave du miroir **(2.5)** consiste à avoir une forme créée par une combinaison des profils superposants des surfaces de la sphère **(6),** du parabvloïde(**6.1**) et de l'ellipsoïde **(6.2)** et la surface ellipsoïdale **(6.2)** est située sur la surface sphérique **(6).**

6. L'appareil selon la revendication 1, **caractérisé par le fait que** la surface concave du miroir **(2.6)** consiste à avoir une forme créée par une combinaison des profils superposants des surfaces de la sphère(**6**), de l'ellipsoïde **(6.2)** et du paraboloïde (**6.1**) et la surface ellipsoïdale **(6.2)** est située sur la surface parabolique (**6.1**).
